# EUROPEAN PATENT APPLICATION

(11) **EP 4 576 850 A2**
(43) Date of publication of application: **25.06.2025**
(21) Application number: 25164403.5
(22) Date of filing: 10.12.2019
(51) Int. Cl.: H04W 8/20

(54) **METHOD FOR ESTABLISHING A BIDIRECTIONAL NAS SIGNALIZATION CHANNEL BETWEEN A SECURE ELEMENT COOPERATING WITH A TERMINAL AND A DISTANT PLATFORM**

(30) Priority: 18.12.2018 EP 18306726
(62) Divisional of application: 19813889.3
(71) Applicant: THALES DIS FRANCE SAS, 92190 Meudon (FR)
(72) Inventor: FINE, Jean-Yves, 13705 LA CIOTAT (FR)
(74) Representative: Scheer, Luc

(57) **Abstract**

The present disclosure proposes a method (500) for establishing a bidirectional Non-Access Stratum (NAS) signalization channel between a secure element (10) cooperating with a terminal (12) and a distant platform (11). The secure element (10) is a UICC, an iUICC or a eUICC. The method (500) comprises initializing (502) the bidirectional Non-Access Stratum (NAS) signalization channel between the secure element (10) and the distant platform (11) upon request of either said secure element (10) or the distant platform (11). The method (500) further comprises exchanging (504) containers (51) of data between the distant platform (11) and the secure element (10) through the Network Exposure Function (30). The containers are attached to downlink and uplink NAS signaling messages during a NAS procedure.

## Description

### TECHNICAL FIELD

The present invention relates to the field of telecommunications and more specifically that of the establishment of a bidirectional channel between a secure element cooperating with a terminal and a distant platform.

### BACKGROUND

A secure element (SE) is a hardware component designed to securely store sensitive data, execute cryptographic operations, and protect against unauthorized access or attacks. It provides a trusted execution environment for security-critical applications, such as authentication, encryption, and secure communication. Secure elements are commonly used in mobile devices, smart cards, and Internet of things (IoT) devices to enhance security in areas like mobile payments, identity verification, and secure network access. The secure element is for example a UICC (Universal Integrated Circuit Card) an iUICC (integrated UICC) or a eUICC (embedded UICC). The terminal cooperating the secure element is typically a portable terminal such as a mobile phone, a smartphone, or a PDA (Personal Digital Assistant).

The secure element is not necessarily physically connected to the terminal, but can communicate with the latter through a short range connection, wherein the security element is offset and communicates with the terminal via a short range channel (e.g., Bluetooth or Wi-Fi).

The establishment of a bidirectional channel between the secure element and the distant platform is for example necessary for administrating this secure element over the air (when the platform is an over-the-air (OTA) platform) or download a full subscription in the secure element (in case when the platform is a Remote Provisioning System (RPS) platform as defined by the Global System for Mobile Communications Association (GSMA)).

Secure elements can be administered in two ways:
The first one allows transmitting, from an OTA platform, data, or programs to targeted secure elements, for example in the course of updating campaigns. This type of administration is called "push" and is based on the transmission in SMS mode. However, this method is not suitable for new generation networks such as LTE networks which do not support the SMS This method exclusively use Hypertext Transfer Protocol (HTTP).

The second one allows interrogating, for example regularly or upon the occurrence of an event, the OTA platform in order to know whether updates are available or not. Such interrogation is initiated by the secure element and is called "polling" or "pull" (the secure element checks out whether the platform has something to transmit to it). The interrogation is carried out over HTTP.

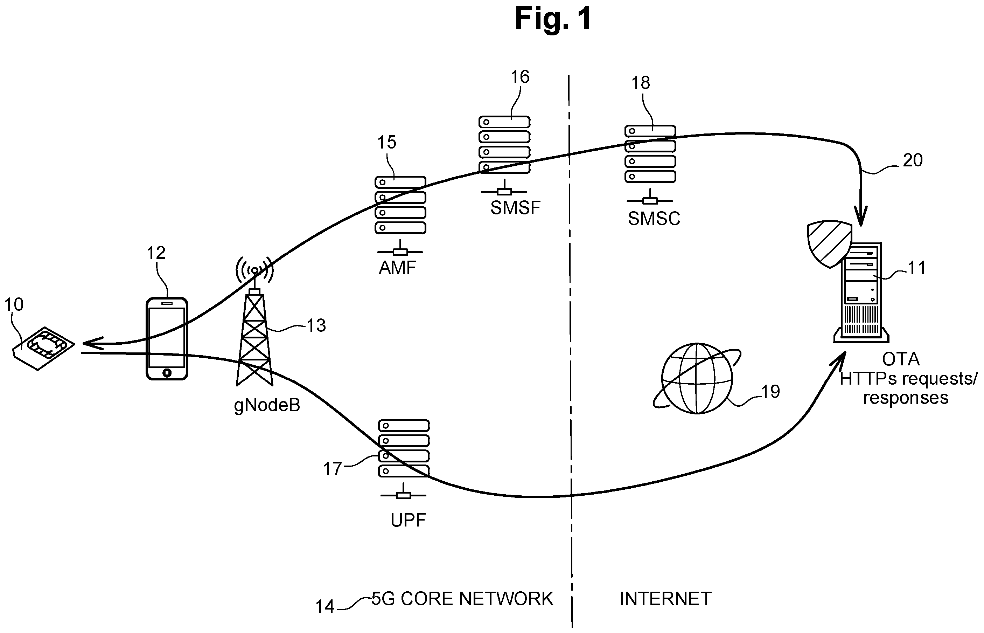

Figure 1 represents two over the air channels that are today available for data exchange between a secure element and a remote server. Thus, Figure 1 shows two different communication methods used for remotely transmitting data, updates, or commands to a device: SMS and HTTP/S.

In this figure, following entities are represented:
- A secure element 10,
- A distant platform 11 (here an OTA platform), and
- A terminal 12 (User Equipment or UE) with which the secure element 10 cooperates. In any case, the terminal 12 communicates with the server 11 through a base station 13 (gNodeB of a 5G network 14).

The 5G core network 14 comprises:
- An AMF (Access and Mobility Management Function) 15 which function is to handle the mobility of the UE 12. Its primary tasks comprise: Registration Management, Connection Management, Reachability Management, Mobility Management, and various functions relating to security and access management and authorization;
- A SMSF (SMS Function) 16 which function is to handle the SMS sent by the UE 12 or to be sent to the UE 12; and
- A UPF (User Plane Function) 17 which role is similar to the one played by the Serving/Packet Gateway in a 4G LTE system. The UPF supports features and capabilities to facilitate user plane operation. Examples comprise packet routing and forwarding, interconnection to the Data Network, policy enforcement and data buffering.

The 5G core network 14 communicates via Internet with the OTA platform 11. On this side we have an Internet Short Message Service Center (SMSC) 18.

The first air channel today available for data exchange between the secure element 10 and the server 11 is referenced 20. It is a bidirectional SMS channel (push mode) that involves the AMF 15, the SMSF 16 and the SMSC 18. SMS is bidirectional but has a very low bandwidth.

The second today available air channel is referenced 21. It is a http/s channel that involves Internet and (on the 5G core network 14 side) the UPF 17. A http/s channel has a good bandwidth but has a unidirectional client server: It is always the UE 12 that shall open the channel, driving the need to have push SMS or non-optimized polling mechanisms.

European Patent Application Publication No. EP-3024254 discloses the administration of secure elements that are located in a foreign country through Short Message Service (SMS), Unstructured Supplementary Service Data (USSD) or data over General Packet Radio Service (GPRS), Universal Mobile Telecommunications System (UMTS), or Long-Term Evolution (LTE).

International Patent Application Publication No. WO 2018/206095 describes a system using bearer independent protocol (BIP) for transmitting data between a SIM and a server.

International Patent Application Publication No. WO 2018/035431 discloses the use of BIP for communication between a terminal and a secure element.

### SUMMARY

The present disclosure proposes a solution to these problems.

The proposed method provides a third bidirectional communication channel with sufficient bandwidth between the secure element 10 and the remote server 11. This channel can be used upon request of either the secure element 10 or the distant platform 11, for example for downloading a preferred PLMN list for roaming purposes (SoR - Stearing of Roaming). In particular, this channel can be used for all remote secure element's administration use cases.

More precisely, the present disclosure proposes a method for establishing a bidirectional NAS (Non-Access Stratum) signalization channel between a secure element cooperating with a terminal and a distant platform through a NEF (Network Exposure Function). The method comprises initializing the bidirectional Non-Access Stratum (NAS) signalization channel between the secure element and the distant platform upon request of either the secure element or the distant platform. The method further comprises exchanging containers of data between the distant platform and the secure element through the NEF. The containers are attached to downlink and uplink NAS signaling messages during a NAS procedure.

In a first embodiment, the distant platform is an OTA platform.

In a second embodiment, the distant platform is a RSP platform as defined by the GSMA. According to some example embodiments, the containers are exchanged over bearer independent protocol (BIP) between the secure element and the terminal.

In another embodiment, the containers are exchanged between the secure element and the terminal through a file written in the secure element.

### BRIEF DESCRIPTION OF THE DRAWINGS

The present invention will be better understood by reading the following description of the figures that represent:
- Figure 1 illustrates two over the air channels that are today available for data exchange between a secure element and a remote server;
- Figure 2 illustrates a third bidirectional communication channel between the secure element and the remote server, according to the embodiments of the present disclosure;
- Figures 3 and 4 illustrate two different ways for exchanging data between the secure element and the user's terminal, respectively, according to the embodiments of the present disclosure; and
- Figure 5 illustrates a method for establishing a bidirectional Non-Access Stratum (NAS) signalization channel between a secure element cooperating with a terminal and a distant platform.

The present invention will be better understood by reading the following description of the above figures.

### DETAILED DESCRIPTION

The term "bidirectional communication channel" refers to a transmission path that allows data to flow in both directions between two entities. This indicates that both sender and receiver can transmit and receive data, enabling interactive and dynamic communication.

Figure 1 has already been described in regard of the state of the art.

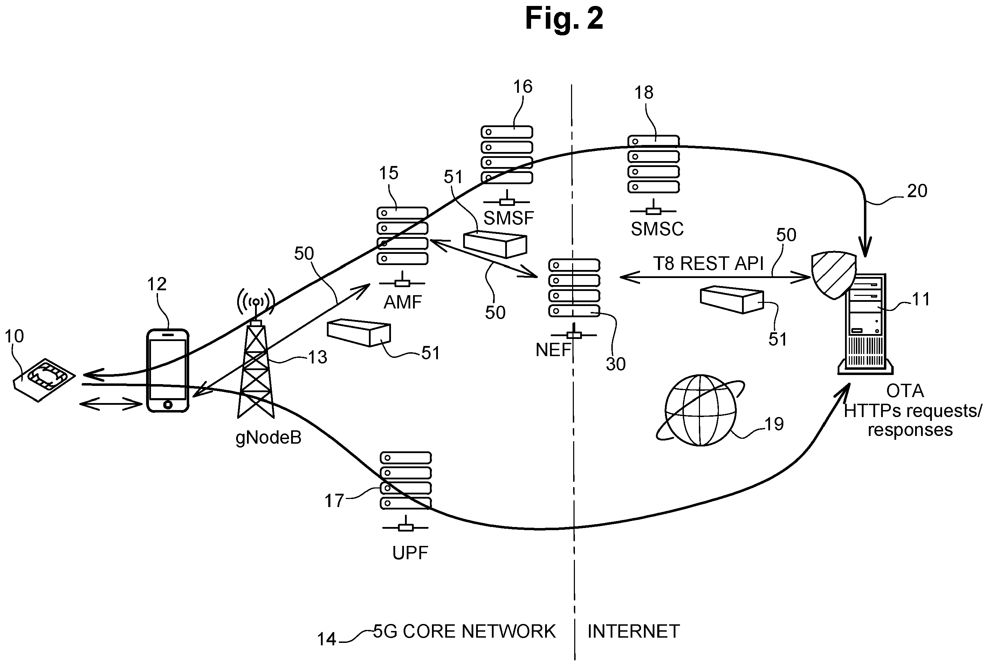

Figure 2 represents a third bidirectional communication channel between the secure element 10 and the remote server 11, according to the embodiments of the present disclosure.

In figure 2, a bidirectional communication channel 50 is established between the secure element 10 and a remote server 11 through 5G network signaling.

T8 is a communication interface/Reference point for exposing framework services as representational state transfer (RESTful) APIs for Machine-to-Machine (M2M) applications between a NEF 30 (Network Exposure Function) and the server 11.

The signalization channel 50 is a NAS (Non-Access Stratum) channel that can be used upon request of either the secure element 10 or the distant platform 11.

NAS refer to a functional layer in the Universal Mobile Telecommunications System (UMTS) and Long-Term Evolution (LTE) wireless telecom protocol stacks between the core network and user equipment. This layer is used to manage the establishment of communication sessions and for maintaining continuous communications with the user equipment as it moves. The NAS is defined in contrast to the Access Stratum which is responsible for carrying information over the wireless portion of the network.

NAS is a protocol for messages passed between the User Equipment, also known as mobiles, and Core Nodes (e.g., Mobile Switching Center, Serving GPRS Support Node, or Mobility Management Entity) that is passed transparently through the radio network. For example, NAS messages can comprise Update or Attach messages, Authentication Messages, Service Requests and so forth. Once the User Equipment (UE) establishes a radio connection, the UE uses the radio connection to communicate with the core nodes to coordinate service. The distinction between Access Stratum and NAS is that the Access Stratum facilitates communication explicitly between the mobile equipment and the radio network, whereas the NAS facilitates communication between the mobile equipment and core network nodes. For LTE, the Technical Standard for NAS is 3GPP TS 24.301.

In an embodiment, the bidirectional Non-Access Stratum (NAS) signalization channel between the secure element 10 and the distant platform 11 (interchangeably referred to as "remote platform" or "remote server") is initialized upon request of either the secure element 10 or the distant platform 11. On this channel, containers 51 are exchanged between the distant platform 11 and the secure element 10 through the NEF 30 that constitutes an interface between the 5G Network 14 and the Internet 19. This means that the containers 51 can be sent by the remote server 11 or by the secure element 10.

In an embodiment, the distant platform 11 encapsulates data into containers for transmission between the secure element 10 and the distant platform 11. The distant platform 11 transmits the encapsulated containers via downlink NAS messages from the distant platform 11 to the secure element 10 through the bidirectional NAS signalization channel.

The secure element 10 receives the encapsulated containers and extracts the data from the encapsulated containers. The secure element 10 generates response data at the secure element and encapsulates it into uplink NAS messages. The secure element transmits the uplink NAS messages back to the distant platform 11 through the NAS signalization channel. Thus, the present disclosure provides a mechanism for exchanging containers of data between the distant platform 11 and the secure element 10 over the bidirectional NAS signalization channel.

These containers are specific designed for exchanges between the secure element 10 and the server 11. The invention proposes a generic "UICC container" that is configured to attach to any Downlink and Uplink signaling message, together with a local way to facilitate exchange of the UICC container between SIM and UE. On the core network side, the Invention leverages also on the remote server / Unified Data Management (UDM) connection.

In an embodiment, the downlink containers (sent from the remote server 11 to the secure element 10) comprise a list of Public Land Mobile Networks (PLMNs) that should be used by the secure element 10. This allows the remote server 11 to control on the behavior of the secure element 10 while roaming. However, these containers are not limited to the list of PLMNs, can carry any type of messages, instructions, applets, etc. to be sent to the secure element 10.

Similarly, for the uplink communication (messages sent by the secure element 10 to the server 11), the same remark applies.

The different packets can be identified by an IARI (IMS Application Reference Identifier) that is defined by default to correspond to a message that is not an IMS message, between the UE 12 and the secure element 10. This IARI is only used between the secure element 10 and the UE 12.

In a first embodiment, the distant platform is an over-the air (OTA) platform.

In a second embodiment, the distant platform is a Remote SIM Provisioning (RSP) platform as defined by the GSMA.

At the level of the exchanges between the secure element 10 and the UE 12, the containers can be exchanged over Bearer Independent Protocol (BIP).

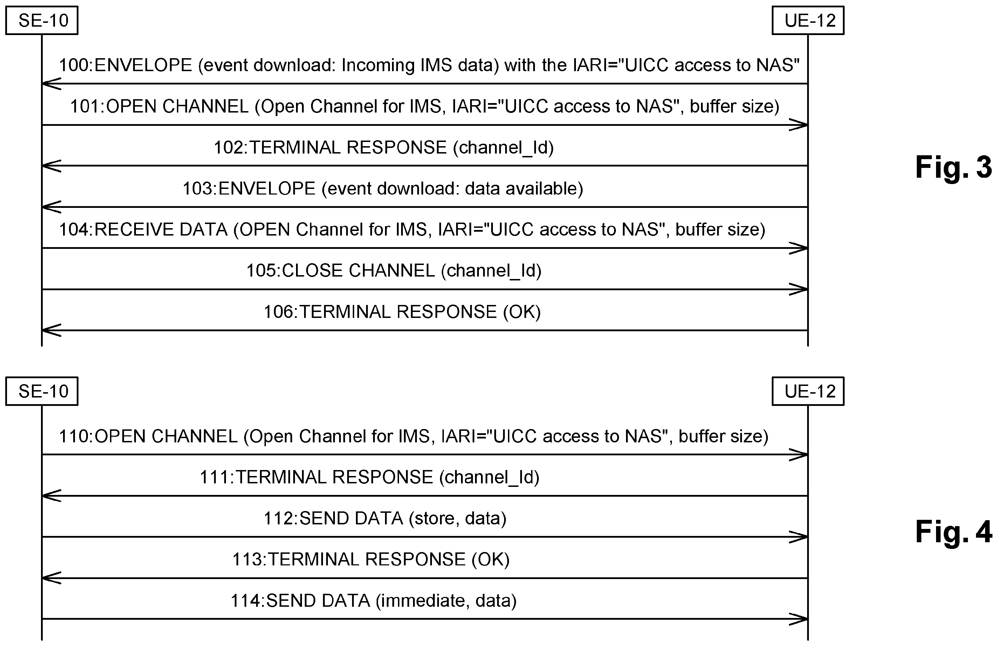

This exchange of data is represented in figure 3.

At step 100, an ENVELOPE (event download: Incoming IMS data) with the IARI= "UICC access to NAS" message is sent from the UE 12 to the SE 10. The IARI (IMS Application Reference Identifier) used in this message is "UICC access to NAS", indicates that the secure element (SE) 10 is notified about data related to NAS access.

At step 101, the SE 10 replies with a message with a "OPEN CHANNEL (Open Channel for IMS, IARI= "UICC access to NAS", buffer size)" message. This command specifies that the channel is for NAS communication, comprises the same IARI, and defines the buffer size to be used.

At step 102, the UE 12 then replies with a "TERMINAL RESPONSE (channel_|d)". This response confirms that the channel has been successfully opened with a given channel ID.

At step 103, the UE 12 replies with a "ENVELOPE (event download: data available)" to inform the SE 10 that new data is available for retrieval.

Then, at step 104, the SE 10 sends a "RECEIVE DATA (Open Channel for IMS, IARI= "UICC access to NAS", buffer size)" message to the UE 12 to retrieve the available data. This command specifies that it is using the previously opened channel, comprises the IARI, and mentions the buffer size for data transfer.

The protocol ends with steps 105 and 106. At step 105, after data exchange is completed, the SE 10 sends a "CLOSE CHANNEL" request to the UE 12, specifying the channel ID to be closed.

At step 106, the UE 12 acknowledges the closure request with a "TERMINAL RESPONSE (OK) message, indicating that the channel has been successfully closed.

Figure 4 illustrates a line diagram indicating a method for exchanging the containers between the secure element and the terminal through a file written in the secure element.

In a first step 110, the SE 10 sends an "OPEN CHANNEL (Open Channel for IMS, IARI= "UICC access to NAS", buffer size)" to the terminal UE 12. This command specifies a channel to be opened for Communication. The command further indicates IARI (IMS Application Reference Identifier) = "UICC access to NAS", which signifies that this communication relates to Non-Access Stratum (NAS) exchanges. The command also indicates a buffer size, which determines how much data can be transmitted in one exchange.

At step 111, the UE responds with a "TERMINAL RESPONSE (channel_Id)" message, which indicates that the communication channel has been successfully established.

Then, at step 112, the SE 10 sends an invitation message "SEND DATA (store, data)" to the UE 12, which indicates that the SE wants the UE to store specific data.

At step 113, the UE 12 answers with a "TERMINAL RESPONSE (OK)", confirming that the data is successfully stored. At step 114, the SE 10 sends a final "SEND DATA (immediate, data)" message to the UE 12. The process finishes with the step 114.

The invention has a particular beneficial for ODC (On Demand Connectivity, where an end-user can choose his Mobile Network Operator (MNO) with an embedded secure element (e.g., eUICC or iUICC) and for OTA platforms that administrate these embedded secure elements.

So, as aforementioned, the present disclosure also introduces a Steering of Roaming (SoR), which allows an MNO to control which networks the SIM should prefer when roaming.

The "SOR transparent container" is attached to two downlink 5G signaling NAS (Non Access Stratum) message:
1. REGISTRATION ACCEPT, and
2. DL NAS.
When the UE receives these NAS messages with an attached SoR container, the UE shall transfer the container to secure element using SMS PP (Point-to-Point) data Download envelope.
Referenced are: 3GPP TS 24.501 CR C1-184908 / TS 23.122 C1-184911/ TS 31.111 C6-180417.

In the core network side, the remote server has a connection with the 5G Unified Data Management (UDM), which is an evolved version of Home Subscriber Server (HSS) evolution) to provide the SoR transparent container content.

It has also to be mentioned that ETSI TS 131.111 V13.4.0 (2016-08) release 13 entitled "Digital cellular telecommunications system (Phase 2+) (GSM); Universal Mobile telecommunications System (UMTS); LTE; Universal Subscriber Identity Module (USIM), Application Toolkit (USAT)" describes, in Annex-R, how a UICC can access to an IMS network. The invention simply proposes to modify the Annex-R in order to enable transfer data between the UE and the secure element using DL NAS and UL NAS messages instead of IMS signaling.

In other words, the present disclosure proposes replacing incoming or outgoing IMS signaling messages by any DL NAS or UL NAS message on Annex-R flowcharts. This ensures that all UICC-related communication is handled at the 5G NAS level rather than relying on IMS SIP-based transmission.

To make such replacement, the present disclosure defines a specific IARI - i.e.: "UICC access to NAS" to ensure both UE and SIM recognize that incoming and outgoing messages should not be routed via SIP (Session Initiation Protocol) for IMS but rather through 5G NAS messages. Through dedicated Terminal Profile value, the UE indicates to SIM that it supports the UICC container Over NAS feature.

Figure 5 illustrates a method for establishing a bidirectional Non-Access Stratum (NAS) signalization channel between a secure element cooperating with a terminal and a distant platform, in accordance with another embodiment of the present disclosure. The secure element is a UICC, an iUICC or a eUICC.

At step 502, the bidirectional Non-Access Stratum (NAS) signalization channel between the secure element 10 and the distant platform 11 is initialized upon request of either the secure element 10 or the distant platform 11.

At step 504, containers 51 of data are exchanged between the distant platform 11 and the secure element 10 through the Network Exposure Function 30. The containers are attached to downlink and uplink NAS signaling messages during a NAS procedure.

In an embodiment, the distant platform 11 is an over-the air (OTA) platform.

In an embodiment, the distant platform 11 is a RSP platform as defined by the GSMA.

In an embodiment, the containers 51 are exchanged over bearer independent protocol (BIP) between the secure element 10 and the terminal 12.

In an embodiment, the containers 51 are exchanged between the secure element 10 and the terminal 12 through a file written in the secure element 10.

Various embodiments of the present disclosure may comprise one or more computer programs stored or otherwise embodied on a computer-readable medium, wherein the computer programs are configured to cause a processor or the computer to perform one or more operations. A computer-readable medium storing, embodying, or encoded with a computer program, or similar language may be embodied as a tangible data storage device storing one or more software programs that are configured to cause a processor or computer to perform one or more operations. Such operations may be, for example, any of the steps or operations described herein. In some embodiments, the computer programs may be stored and provided to a computer using any type of non-transitory computer-readable media.

The invention provides a robust and efficient method for exchanging secure element containers with the UE using a 5G NAS-based approach, bypassing traditional IMS SIP communication. This enhances remote eUICC management, improves roaming control (SoR), and ensures secure communication between UE and SE while remaining compliant with industry standards.

## Claims

1. A method (500) for establishing a bidirectional Non-Access Stratum (NAS) signalization channel between a secure element (10) cooperating with a terminal (12) and a distant platform (11) through a Network Exposure Function (30), said secure element (10) being a Universal Integrated Circuit Card (UICC), an iUICC or an eUICC, the method (500) comprising:
initializing (502) the bidirectional Non-Access Stratum (NAS) signalization channel between the secure element (10) and the distant platform (11) upon request of either said secure element (10) or said distant platform (11); and
exchanging (504) containers (51) of data between said distant platform (11) and said secure element (10) through said Network Exposure Function (30), said containers being attached to downlink and uplink NAS signaling messages during a NAS procedure.

2. The method (500) according to claim 1, wherein said distant platform (11) is an over-the air (OTA) platform.

3. The method (500) according to claim 1, wherein said distant platform (11) is a Remote SIM Provisioning (RSP) platform as defined by the Global System for Mobile Communications Association (GSMA).

4. The method (500) according to any of the claims 1 to 3, wherein said containers (51) are exchanged over bearer independent protocol (BIP) between said secure element (10) and said terminal (12).

5. The method (500) according to any of the claims 1 to 3, wherein said containers (51) are exchanged between said secure element (10) and said terminal (12) through a file written in said secure element (10).

6. A method for facilitating a communication over a bidirectional Non-Access Stratum (NAS) signalization channel between a secure element (10) cooperating with a terminal (12) and a distant platform (11), the method comprising:
encapsulating data into containers for transmission between the secure element and the distant platform;
transmitting the encapsulated containers via downlink NAS messages from the distant platform to the secure element through the bidirectional NAS signalization channel;
receiving the encapsulated containers at the secure element and extracting the data from the encapsulated containers;
generating, at the secure element, response data based on the extracted data and encapsulating the response data into uplink NAS messages; and
transmitting the uplink NAS messages back to the distant platform through the NAS signalization channel.
